# FASCICULE DE BREVET EUROPEEN

(11) **EP 1 477 872 B1**
(45) Date de publication et mention de la délivrance du brevet: **27.12.2006**
(21) Numéro de dépôt: 04291140.4
(22) Date de dépôt: 04.05.2004
(51) Int. Cl.: G05D 1/00

(54) **Procédé et dispositif de pilotage d'un aéronef**
Verfahren und Vorrichtung zur Steuerung eines Flugzeuges
Method and apparatus for guiding an aircraft

(30) Priorité: 14.05.2003 FR 0305764
(43) Date de publication de la demande: 17.11.2004
(73) Titulaire: AIRBUS France, 31060 Toulouse (FR)
(72) Inventeur: Villaume, Fabrice, 31000 Toulouse (FR); Duprez, Jean, 31170 Tournefeuille (FR)
(74) Mandataire: Hauer, Bernard

(56) Documents cités:
- FR-A- 2 694 738
- FR-A- 2 770 824
- US-A- 4 482 961
- US-A- 5 008 825

## Description

La présente invention concerne un procédé et un dispositif de pilotage d'un aéronef, en particulier d'un avion de transport civil, roulant au sol.

Dans le cadre de la présente invention on entend par roulage au sol tout type de roulage possible d'un aéronef, tel que le roulage sur une piste d'atterrissage au cours de phases d'atterrissage et de décollage, le roulage sur des voies de circulation ou le roulage sur des aires de manoeuvres, notamment.

Lorsqu'un aéronef, en particulier un avion, roule au sol sur une piste en pilotage manuel, le pilote commande l'orientation des roues du train d'atterrissage avant et de la gouverne de direction de la dérive de façon à suivre sensiblement la trajectoire souhaitée. Cette trajectoire peut être rectiligne ou courbe et correspondre dans ce cas à une manoeuvre de l'aéronef, par exemple pour s'engager sur une bretelle de sortie. Pour ce faire, le pilote agit sur des organes de commande (pédales du palonnier, volant de commande de l'orientation des roues du train d'atterrissage avant), dont les signaux de sortie (ou ordres) sont (directement) envoyés comme consignes aux actionneurs du train d'atterrissage avant et de la gouverne de direction de la dérive.

En pratique, lesdits signaux de sortie des organes de commande sont, en général, simplement mis en forme avant d'être envoyés comme consignes, par des blocs fonctionnels appropriés, qui ne font qu'appliquer un gain variable auxdits signaux de consigne : par exemple une plage neutre autour de la position de repos, puis une première valeur de gain, puis une seconde valeur de gain supérieure à la première.

Un tel mode de fonctionnement présente des inconvénients. En particulier, il constitue une charge de travail importante pour le pilote qui, lors du roulage au sol, doit en permanence agir sur les organes de commande de l'orientation des roues du train avant et de la gouverne de direction de la dérive, afin de suivre la trajectoire souhaitée. Cette contrainte est renforcée lorsque la trajectoire souhaitée est courbe. Parfois, le pilote est amené à agir simultanément sur une pluralité desdits organes de commande afin de suivre au mieux cette trajectoire, tout en gérant le temps de réponse des gouvernes à un ordre donné au moyen desdits organes de commande, ce qui nécessite bien entendu une attention constante de la part du pilote, qui est particulièrement fatigante.

En outre, lorsque le roulage au sol s'effectue à l'aide d'un pilote automatique, par exemple lors du roulage à l'atterrissage, une loi de roulement commande les actionneurs des différentes gouvernes, en fonction de l'erreur de position de l'aéronef par rapport à l'axe de la piste, qui est déterminée en utilisant au moins l'un parmi différents moyens de localisation usuels (ILS, MLS, GLS, DGPS, ....), voir par exemple le brevet US-A- 5 000 825. Cette loi de roulement présente l'inconvénient d'être délicate à mettre au point et d'être spécifique au modèle d'aéronef considéré.

La présente invention a pour objet un procédé de pilotage d'un aéronef roulant au sol, qui permet de remédier aux inconvénients précités.

A cet effet, ledit procédé de pilotage est remarquable selon l'invention en ce que, de façon automatique :
a) on détermine une consigne de rotation de l'aéronef ;
b) on détermine un moment global devant être appliqué à l'aéronef selon l'axe de lacet pour que ledit aéronef réalise ladite consigne de rotation ;
c) on répartit ledit moment global en une somme de moments élémentaires, dont chacun correspond à l'effet engendré sur l'aéronef respectivement par l'une d'une pluralité de gouvernes, chacune desdites gouvernes représentant un moyen particulier qui est susceptible d'agir sur le mouvement de lacet de l'aéronef et qui est commandé par au moins un actionneur ; et
d) pour chacune desdites gouvernes, on calcule une consigne à appliquer à l'actionneur de la gouverne correspondante de sorte que cette dernière engendre le moment élémentaire associé.

Ainsi, grâce à la répartition automatique du moment global comme somme de moments élémentaires et au calcul des consignes correspondantes qui sont ensuite appliquées aux actionneurs des différentes gouvernes, on peut choisir à chaque instant la répartition (entre les différentes gouvernes) qui est la plus appropriée (notamment la plus efficace), ce qui permet d'améliorer le contrôle latéral de l'aéronef selon l'axe de lacet.

Dans un mode de réalisation particulier, lorsque l'aéronef est en pilotage manuel, on détermine à l'étape a) ladite consigne de rotation (vitesse de lacet de l'aéronef, angle d'orientation du vecteur vitesse de l'aéronef, ...), à partir des ordres engendrés par au moins un organe de commande de l'aéronef (par exemple le palonnier ou le volant de commande de l'orientation des roues du train d'atterrissage avant), qui est susceptible d'être actionné par un pilote dudit aéronef.

Ainsi, le pilote peut entrer des consignes correspondant au contrôle latéral souhaité de l'aéronef, sans se préoccuper de la façon de réaliser ce contrôle au moyen des différentes gouvernes aptes à le mettre en oeuvre. Le pilote commande donc une rotation globale de l'aéronef, plutôt qu'une pluralité de mouvements individuels différentes des gouvernes.

Par ailleurs, de façon avantageuse, lorsque l'aéronef est en pilotage automatique, on détermine à l'étape a) ladite consigne de rotation, à partir de l'écart éventuel entre la position de l'aéronef sur une piste au sol et l'axe de cette piste. La loi de pilotage permettant de déterminer ladite consigne de rotation est beaucoup plus facile à élaborer qu'une loi de roulement du type précité.

De préférence, à l'étape a), la consigne de rotation est une consigne de vitesse de lacet.

Dans un mode de réalisation particulier correspondant à un pilotage manuel, de façon avantageuse, l'aéronef comporte, comme organes de commande, au moins un palonnier et un volant de commande d'orientation du train d'atterrissage avant dudit aéronef, et à l'étape a) :
- on traduit l'ordre engendré par le palonnier directement en une première consigne de vitesse de lacet ;
- on traduit l'ordre engendré par le volant en une consigne intermédiaire d'angle d'orientation du vecteur vitesse du train d'atterrissage avant, qui est convertie en une seconde consigne de vitesse de lacet ; et
- on fait la somme desdites première et seconde consignes de vitesse de lacet de manière à obtenir une vitesse globale de lacet qui représente ladite consigne de rotation de l'aéronef.

Dans une variante de ce mode de réalisation particulier, on multiplie ladite consigne intermédiaire d'angle d'orientation du vecteur vitesse, par un coefficient de limitation qui dépend de la vitesse longitudinale de l'aéronef, le résultat obtenu étant converti dans ladite seconde consigne de vitesse de lacet.

Cette dernière variante permet la réalisation de manoeuvres précises (braquage des roues du train d'atterrissage avant à faible vitesse pour le suivi de courbes, ou l'engagement sur des voies de circulation), ainsi que le suivi d'un axe de piste, par exemple en phase de décollage ou d'atterrissage (avec une utilisation de l'orientation de la gouverne de direction de la dérive lorsque la vitesse est élevée, le braquage des roues du train avant à vitesse élevée n'étant pas recommandé pour le suivi d'un axe de piste lors du roulage au décollage et à l'atterrissage).

Dans le cadre de la présente invention, on entend par gouverne tout moyen permettant de modifier le mouvement latéral de l'aéronef. Ainsi, de façon avantageuse, on peut utiliser comme gouvernes :
- la gouverne de direction de la dérive de l'aéronef, dont on commande l'orientation, et le train d'atterrissage avant, dont on commande également l'orientation ; et/ou
- au moins deux trains d'atterrissage différents de l'aéronef, dont on commande le freinage de façon dissymétrique ; et/ou
- au moins deux moteurs de l'aéronef, agencés de part et d'autre de l'axe longitudinal dudit aéronef, dont on commande la poussée de façon dissymétrique.

Dans un mode de réalisation préféré, à l'étape c), pour répartir ledit moment global en une somme de moments élémentaires associés respectivement à différentes gouvernes, on tient compte d'au moins l'un des critères suivants, relatifs auxdites gouvernes :
- la hiérarchie des gouvernes ;
- la disponibilité des gouvernes;
- l'efficacité des gouvernes ; et
- le niveau d'autorité des gouvernes.

Par ailleurs, dans un mode de réalisation particulier, on utilise comme gouverne au moins le train d'atterrissage avant de l'aéronef, dont on commande l'orientation, et à l'étape c), on répartit le moment global en fonction au moins de la vitesse longitudinale de l'aéronef.

Dans ce cas, avantageusement :
- lorsque ladite vitesse longitudinale de l'aéronef est inférieure à une première vitesse prédéterminée, la répartition est maximale sur ledit train d'atterrissage avant ;
- lorsque ladite vitesse longitudinale de l'aéronef est supérieure à une seconde vitesse prédéterminée qui est supérieure à ladite première vitesse prédéterminée, la répartition est minimale sur ledit train d'atterrissage avant ; et
- ladite répartition est décroissante vis-à-vis dudit train d'atterrissage avant entre lesdites première et seconde vitesses prédéterminées.

Ce mode de réalisation permet la réalisation de manoeuvres précises, ainsi que le suivi d'un axe de piste, par exemple en phase de décollage ou d'atterrissage.

Dans une variante de réalisation :
- lorsque ladite vitesse longitudinale de l'aéronef est inférieure à une première vitesse prédéterminée, on désactive le mode de commande par répartition et on réalise une commande directe du train d'atterrissage avant ;
- lorsque ladite vitesse longitudinale de l'aéronef est supérieure à une seconde vitesse prédéterminée, qui est supérieure à ladite première vitesse prédéterminée, on désactive la commande directe et on réalise uniquement un mode de commande par répartition ; et
- entre lesdites première et seconde vitesses prédéterminées, on passe progressivement de la commande directe au mode de commande par répartition.

Par ailleurs, dans un mode de réalisation préféré, on utilise comme gouverne le train d'atterrissage avant de l'aéronef, dont on commande l'orientation, et la consigne à appliquer à l'actionneur correspondant est la somme d'une première consigne d'orientation du train d'atterrissage avant, déterminée à l'étape d), et une seconde consigne d'orientation du train d'atterrissage avant, engendrée par une boucle ouverte spécifique.

La présente invention concerne également un dispositif de pilotage d'un aéronef roulant au sol.

Selon l'invention, ledit dispositif de pilotage du type comportant :
- des moyens pour engendrer des ordres de commande ;
- des gouvernes représentant chacune un moyen particulier qui est susceptible d'agir sur le mouvement de lacet de l'aéronef et qui est commandé par au moins un actionneur ; et
- une unité centrale qui détermine, à partir desdits ordres de commande, des consignes à appliquer aux actionneurs desdites gouvernes,
est remarquable en ce que ladite unité centrale comporte :
- des moyens pour déterminer une consigne de rotation de l'aéronef, à partir desdits ordres de commande ;
- des moyens pour déterminer un moment global devant être appliqué à l'aéronef selon l'axe de lacet pour que ledit aéronef réalise ladite consigne de rotation ;
- des moyens pour répartir ledit moment global en une somme de moments élémentaires, dont chacun correspond à l'effet engendré sur l'aéronef respectivement par lesdites gouvernes ; et
- des moyens pour calculer, pour chacune desdites gouvernes, la consigne à appliquer à l'actionneur de la gouverne correspondante de sorte que cette dernière engendre le moment élémentaire associé.

Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
La figure 2 montre schématiquement un mode de réalisation particulier de moyens d'un dispositif conforme à l'invention.
Les figures 3 et 4 sont des graphiques permettant d'expliquer différents modes de réalisation de l'invention.
La figure 5 est le schéma synoptique d'un mode de réalisation particulier d'un dispositif conforme à l'invention.
La figure 6 montre schématiquement un avion, auquel on applique la présente invention.

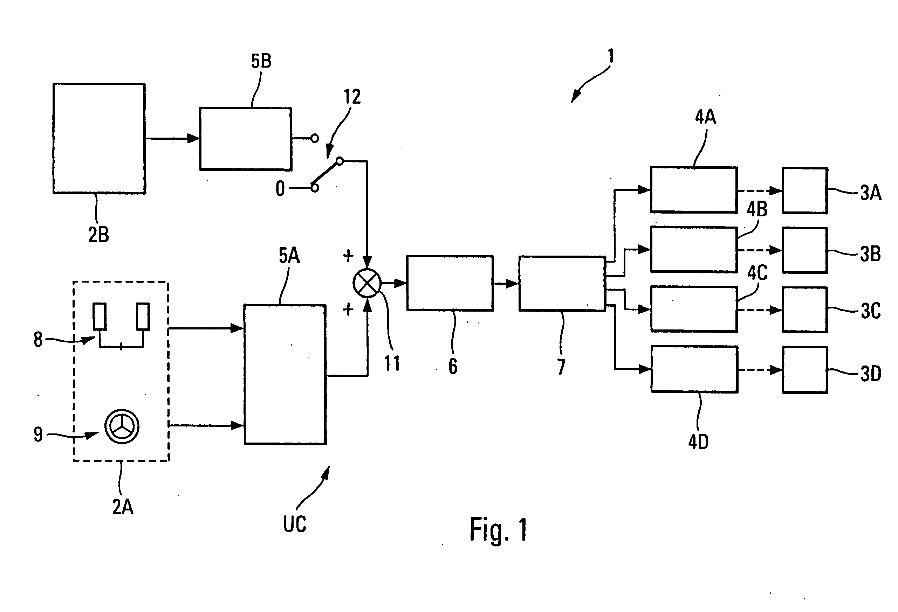

Le dispositif 1 conforme à l'invention et représenté schématiquement sur la figure 1 est un dispositif de pilotage d'un aéronef A, en particulier d'un avion de transport civil, roulant au sol.

Ledit dispositif 1 est du type comportant :
- des moyens 2A, 2B pour engendrer des ordres de commande ;
- des gouvernes 3A, 3B, 3C, 3D représentant chacune un moyen particulier qui est susceptible d'agir sur le mouvement de lacet de l'aéronef A et qui est commandé par au moins un actionneur 4A, 4B, 4C, 4D ; et
- une unité centrale UC qui détermine, à partir desdits ordres de commande reçus des moyens 2A, 2B, des consignes à appliquer aux actionneurs 4A, 4B, 4C, 4D desdites gouvernes 3A, 3B, 3C, 3D.

Selon l'invention, ladite unité centrale UC comporte :
- des moyens 5A, 5B pour déterminer une consigne de rotation rc de l'aéronef A, à partir desdits ordres de commande ;
- des moyens 6 pour déterminer un moment global Mc devant être appliqué à l'aéronef A selon l'axe de lacet, pour que ledit aéronef A réalise ladite consigne de rotation ; et
- des moyens 7 :
   ■ pour répartir ledit moment global Mc en une somme de moments élémentaires Mi, dont chacun correspond à l'effet engendré sur l'aéronef A respectivement par lesdites différentes gouvernes; et
   ■ pour calculer, pour chacune desdites gouvernes 3A, 3B, 3C, 3D, la consigne à appliquer à l'actionneur de la gouverne correspondante de sorte que cette dernière engendre le moment élémentaire associé.

Ainsi, grâce à la répartition automatique du moment global Mc en une somme de moments élémentaires Mi et au calcul des consignes correspondantes qui sont ensuite appliquées aux actionneurs 4A, 4B, 4C, 4D des différentes gouvernes 3A, 3B, 3C, 3D, l'unité centrale UC permet de choisir à chaque instant la répartition (entre les différentes gouvernes) qui est la plus appropriée (notamment la plus efficace), ce qui permet d'améliorer le contrôle latéral de l'aéronef A selon l'axe de lacet.

Dans un mode de réalisation particulier, lorsque l'aéronef A est en mode de pilotage manuel, les moyens 2A comportent au moins un organe de commande 8, 9 qui est susceptible d'être actionné par un pilote de l'aéronef A et ils transmettent les ordres engendrés par ledit organe de commande 8, 9 aux moyens 5A qui en déduisent une consigne de rotation de l'aéronef A (vitesse de lacet de l'aéronef, angle d'orientation du vecteur vitesse de l'aéronef, ...).

Dans un mode de réalisation préféré, lesdits moyens 2A comportent, comme organes de commande, dans le cas d'un avion A tel que représenté par exemple sur la figure 6 :
- un palonnier 8 de type usuel ; et
- un volant 9 de type usuel, de commande de l'orientation des roues du train d'atterrissage avant 10 de l'aéronef A.

Ce mode de réalisation permet au pilote d'entrer des consignes correspondant au contrôle latéral souhaité de l'aéronef A, sans se préoccuper de la façon de réaliser ce contrôle au moyen des différentes gouvernes 3A, 3B, 3C, 3D aptes à le mettre en oeuvre : le pilote commande une rotation globale de l'aéronef A plutôt qu'un mouvement individuel de chacune des gouvernes 3A, 3B, 3C, 3D. Ainsi, une rotation de l'aéronef A lors du roulage au sol (pistes, voies de circulation, aires de manoeuvres, ...) est mise en oeuvre lorsque le pilote agit sur un organe de commande 8, 9, alors que cet aéronef A continue à rouler tout droit lorsque le pilote n'agit plus sur lesdits organes de commande 8, 9. On peut donc considérer que les consignes sont entrées sous forme d'objectif à atteindre. Il en résulte, d'une part, une amélioration de l'ergonomie du pilotage du fait de la diminution de la charge de travail du pilote, et d'autre part, une amélioration du contrôle de l'aéronef A le long de la trajectoire souhaitée.

Dans un autre mode de réalisation, lorsque l'aéronef A est en mode de pilotage automatique, lesdits moyens 2B déterminent de façon usuelle l'axe de la piste sur laquelle roule l'aéronef A, en utilisant par exemple les informations issues de systèmes connus (ILS, MLS, GLS, DGPS, ...), ainsi que l'écart éventuel (ou l'erreur éventuelle) entre la position effective de l'aéronef A sur cette piste au sol et ledit axe de cette piste.

De plus, lesdits moyens 5B comprennent une loi de guidage pour calculer une consigne de rotation de l'aéronef (vitesse de lacet de l'aéronef, angle d'orientation du vecteur vitesse de l'aéronef, ...) qui permet d'annuler le cas échéant ladite erreur de position de l'aéronef A. Une telle loi de guidage est facile à élaborer.

Dans ce cas, dans un mode de réalisation particulier, en mode de pilotage automatique, le dispositif 1 peut comporter un sommateur 11 qui fait la somme des consignes de rotation reçues respectivement desdits moyens 5A et 5B et la transmet aux moyens 6.

En revanche, en mode de pilotage manuel, seules les consignes de rotation issues desdits moyens 5A sont transmises aux moyens 6. Pour ce faire, le dispositif 1 comporte, de plus, un commutateur 12 qui est prévu entre les moyens 5B et le sommateur 11 et qui est amené à une valeur « 0 » lors d'un pilotage manuel de l'aéronef A.

On notera que lesdits moyens 6 et 7 sont communs aux modes de pilotage manuel et automatique. Cela présente l'avantage d'une homogénéité des lois de commande dans ces deux modes de pilotage, ainsi qu'une mise au point et une maintenance plus faciles et moins coûteuses. Les étapes mises en oeuvre par ces moyens 6 et 7 permettent de réaliser un asservissement en rotation de l'aéronef A.

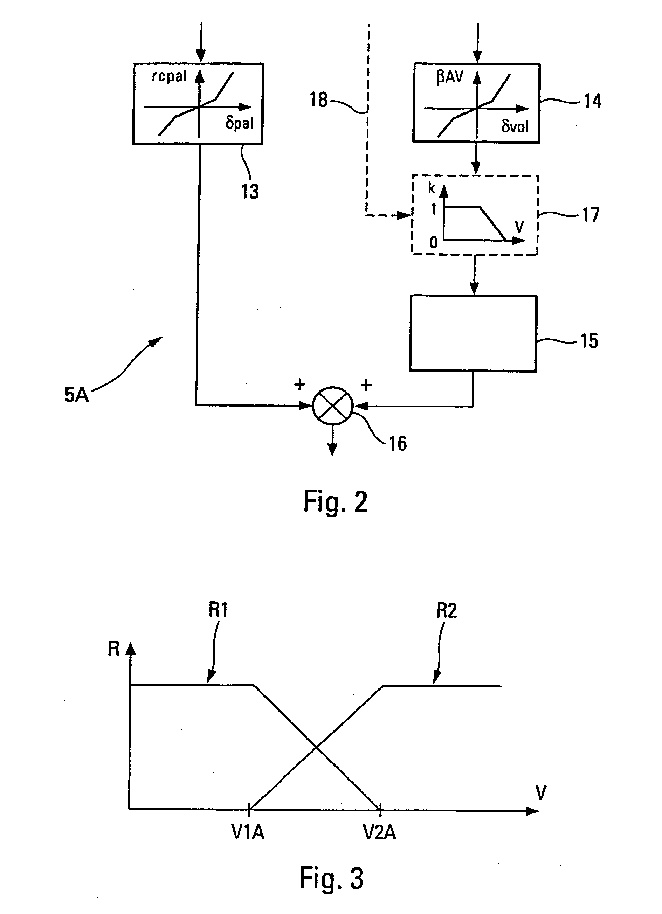

Dans un mode de réalisation particulier correspondant à un pilotage manuel, les moyens 5A comportent, comme représenté sur la figure 2 :
- des moyens 13 qui traduisent l'ordre δpal engendré par le palonnier 8 directement en une première consigne de vitesse de lacet rcpal ;
- des moyens 14 qui traduisent l'ordre δvol engendré par le volant 9 en une consigne intermédiaire βAV d'angle d'orientation du vecteur vitesse du train d'atterrissage avant 10, qui est convertie par des moyens 15 en une seconde consigne de vitesse de lacet rcvol ; et
- des moyens 16 qui font la somme desdites première et seconde consignes de vitesse de lacet rcpal et rcvol de manière à obtenir une consigne globale de vitesse de lacet rcglobal qui représente ladite consigne de rotation rc de l'aéronef A.

Dans une variante de ce mode de réalisation particulier, les moyens 5A comportent, de plus, des moyens 17 (représentés en traits interrompus) qui multiplient ladite consigne intermédiaire βAV d'angle d'orientation du vecteur vitesse du train avant 10, par un coefficient de limitation k, qui est compris entre 0 et 1 et qui dépend de la vitesse longitudinale V (reçue par une liaison 18) de l'aéronef A, le résultat obtenu βAVeff étant converti dans ladite seconde consigne de vitesse de lacet rcvol par les moyens 15.

Pour de faibles valeurs de la vitesse longitudinale V, (k = 1) la consigne effective βAVeff d'angle d'orientation du vecteur vitesse du train avant 10 correspond à la valeur βAV déterminée de la façon indiquée précédemment, tandis que pour des valeurs de vitesse élevées, (k = 0) la consigne effective βAVeff d'angle d'orientation du vecteur vitesse du train avant 10 est nulle. Un tel mode de fonctionnement permet la réalisation de manoeuvres précises (braquage des roues du train avant 10 à faible vitesse pour le suivi de courbes, l'engagement sur des voies de circulation), ainsi que le suivi d'un axe de piste, par exemple en phase de décollage ou d'atterrissage (utilisation de l'orientation de la gouverne de direction de la dérive lorsque la vitesse est élevée, le braquage des roues du train avant 10 à vitesse élevée n'étant pas recommandé pour le suivi d'un axe de piste lors du roulage au décollage et à l'atterrissage).

Dans le cadre de la présente invention, on entend par gouverne 3A, 3B, 3C, 3D tout moyen permettant de modifier le mouvement latéral (mouvement de lacet) de l'aéronef A. Ainsi de façon avantageuse, on peut utiliser comme gouvernes 3A, 3B, 3C, 3D :
- la gouverne de direction (non représentée) de la dérive de l'aéronef A, dont on commande l'orientation, et le train d'atterrissage avant 10, dont on commande également l'orientation ; et/ou
- au moins deux trains d'atterrissage différents 19A, 19B (figure 6) de l'aéronef A, notamment les trains principaux droit et gauche, dont on commande le freinage de façon dissymétrique ; et/ou
- au moins deux moteurs 20A, 20B, 20C, 20D (figure 6) de l'aéronef A, agencés de part et d'autre de l'axe longitudinal 21 dudit aéronef A, dont on commande la poussée de façon dissymétrique.

Dans un mode de réalisation préféré, pour répartir ledit moment global Mc en une somme de moments élémentaires Mi associés respectivement à différentes gouvernes, les moyens 7 tiennent compte d'au moins l'un des critères suivants, relatifs auxdites gouvernes 3A, 3B, 3C, 3D :
- la hiérarchie des gouvernes 3A, 3B, 3C, 3D. On définit des niveaux de priorité des différentes gouvernes 3A, 3B, 3C, 3D et on agit de préférence sur celles qui présentent la priorité la plus élevée. On peut aussi répartir le moment global Mc entre ces différentes gouvernes au prorata de leurs niveaux de priorité respectifs ;
- la disponibilité des gouvernes 3A, 3B, 3C, 3D. Pour répartir le moment global Mc, ont tient compte de la disponibilité (pannes, ...) des différentes gouvernes. On compense ainsi l'indisponibilité de certaines d'entre elles en agissant sur les autres ;
- l'efficacité des gouvernes 3A, 3B, 3C, 3D. Selon le point de fonctionnement, certaines gouvernes sont plus efficaces que d'autres (par exemple, l'efficacité de la dérive croît avec le carré de la vitesse de l'aéronef). On utilise donc, de préférence, les gouvernes 3A, 3B, 3C, 3D ayant le plus d'efficacité au point de fonctionnement considéré ; et
- le niveau d'autorité des gouvernes 3A, 3B, 3C, 3D. Selon le point de fonctionnement, on peut être amené à limiter l'utilisation de certaines gouvernes. Par exemple, pour une vitesse de l'aéronef A supérieure à une valeur prédéterminée, on limite l'angle de braquage des roues du train avant 10 à 6°.

Dans les modes de réalisation pour lesquels l'orientation des roues du train avant 10 est concernée par ladite répartition des moments appliqués à l'aéronef A selon l'axe de lacet, de façon avantageuse, cette répartition est notamment fonction de la vitesse longitudinale V de l'aéronef A. Dans un mode de réalisation préféré, cette répartition est maximale sur l'orientation desdites roues du train avant 10 lorsque la vitesse longitudinale V est inférieure à une première valeur de vitesse prédéterminée V1A, puis elle est décroissante lorsque la vitesse V varie entre cette première valeur de vitesse prédéterminée V1A et une seconde valeur de vitesse prédéterminée V2A, et elle est minimale lorsque la vitesse V est supérieure à cette seconde valeur de vitesse prédéterminée V2A.

Par exemple, lorsque la répartition globale R des moments appliqués à l'aéronef A selon l'axe de lacet concerne l'orientation de la gouverne de direction de la dérive (partie R2 sur la figure 3) et l'orientation des roues du train avant 10 (partie R1 sur la figure 3), la répartition entre les parties R1 et R2 en fonction de la vitesse longitudinale V de l'aéronef A peut correspondre à celle représentée sur la figure 3.

Ainsi :
- pour une vitesse V faible, inférieure à la première valeur V1A, le guidage latéral de l'aéronef A ne dépend que de l'orientation des roues du train avant 10 ;
- pour une vitesse comprise entre la première valeur V1A et la seconde valeur V2A, l'action de l'orientation desdites roues est dégressive au profit de l'orientation de la gouverne de direction de la dérive ; et
- pour une vitesse V supérieure à la valeur V2A, le contrôle latéral de l'aéronef A ne dépend que de l'orientation de la gouverne de direction de la dérive.

Ce mode de réalisation permet la réalisation de manoeuvres précises (braquage des roues du train avant 10 à faible vitesse pour le suivi de courbes, ou l'engagement sur des voies de circulation, ...), ainsi que le suivi d'un axe de piste, par exemple en phase de décollage ou d'atterrissage (orientation de la gouverne de direction de la dérive lorsque la vitesse est élevée, le suivi d'un axe de piste étant difficile à réaliser en utilisant le braquage des roues du train avant 10 à vitesse élevée).

Dans un mode de réalisation particulier correspondant au cas précédent, lorsque la vitesse longitudinale V de l'aéronef A est inférieure à une valeur de seuil prédéterminé V1B, on désactive le mode de commande de l'orientation des roues du train avant 10 selon l'invention (mode de commande par répartition MCR) et on revient à une commande directe CD de cette orientation au moyen du volant 9. Un tel mode de fonctionnement est avantageux, car lorsque la vitesse V de l'aéronef A est très faible notamment proche de zéro ou nulle, la loi de commande par répartition selon l'invention a tendance à induire un effet déstabilisant et à provoquer un braquage maximum desdites roues pour essayer de réaliser l'asservissement en vitesse de lacet décrit précédemment. Or, selon la valeur de la consigne de vitesse de lacet, un tel asservissement ne peut être réalisé avec succès lorsque la vitesse de l'aéronef est nulle ou très proche de zéro.

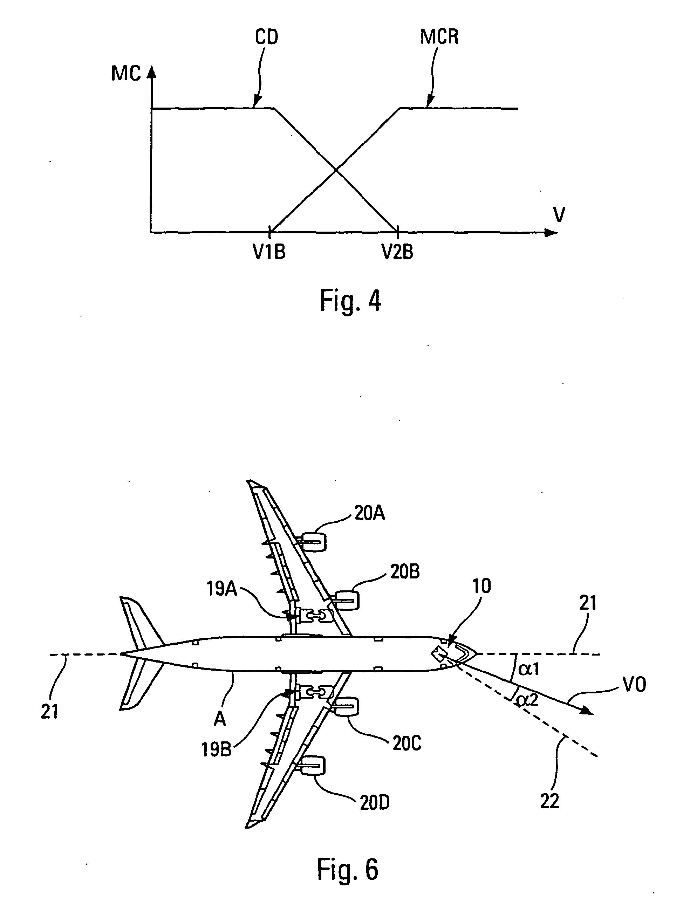

Dans l'exemple représenté sur la figure 4, le choix du mode de commande MC entre un mode de commande par répartition MCR conforme à l'invention et une commande directe CD dépend, selon l'invention, de la valeur de la vitesse longitudinale V de l'aéronef A par rapport à des valeurs de vitesse prédéterminées V1B,V2B. Ainsi ;
- lorsque la vitesse longitudinale V de l'aéronef A est inférieure à une première vitesse prédéterminée V1B, on désactive le mode de commande par répartition MCR et on réalise uniquement une commande directe CD du train d'atterrissage avant 10 ;
- lorsque la vitesse longitudinale V de l'aéronef A est supérieure à une seconde vitesse prédéterminée V2B, qui est supérieure à ladite première vitesse prédéterminée V1B, on désactive la commande directe CD et on réalise uniquement un mode de commande par répartition MCR ; et
- entre lesdites première et seconde vitesses prédéterminées V1B et V2B on passe progressivement de la commande directe CD au mode de commande par répartition MCR.

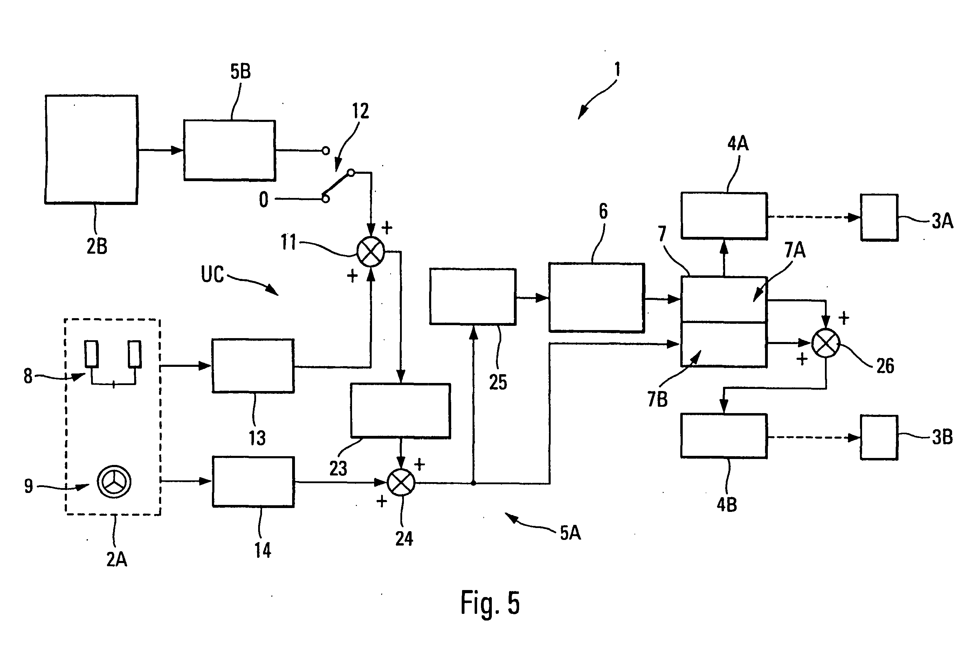

Par ailleurs, dans un mode de réalisation particulier représenté sur la figure 5, les moyens 5A comportent :
- lesdits moyens 14 qui traduisent l'ordre δvol engendré par le volant 9 en une consigne βAV1 d'angle d'orientation du vecteur vitesse du train d'atterrissage avant 10 ;
- lesdits moyens 13 qui traduisent l'ordre δpal engendré par le palonnier 8 en une consigne βAV2 d'angle d'orientation du vecteur vitesse du train d'atterrissage avant 10. Cette consigne βAV2 est transmise au sommateur 11 ;
- des moyens 23 agencés à la sortie du sommateur 11 qui transforment les informations reçues en une consigne βAV3 ;
- un sommateur 24 qui fait la somme desdites consignes βAV1 et βAV3 de manière à obtenir une consigne βAVc ; et
- des moyens 25 pour convertir cette consigne βAVc en une consigne de vitesse de lacet rc qui est transmise aux moyens 6. En outre, lesdits moyens 7 comportent :

- une première unité 7A qui détermine :
   - la consigne qui est appliquée à l'actionneur 4A de la gouverne de direction 3A de l'aéronef ; et
   - une consigne βRA ; et
- une seconde unité 7B qui calcule une consigne kβAVc à partir de la consigne βAVc issue du sommateur 24, en la multipliant par le coefficient k.

Les consignes βRA et kβAVc sont additionnés par un sommateur 26 avant d'être appliquées à l'actionneur (actionneur 4B sur la figure 5) du train d'atterrissage avant 10 (gouverne 3B sur la figure 5) de l'aéronef A.

Sur la figure 6, on a représenté le vecteur vitesse VO du train d'atterrissage avant 10 de l'aéronef A, l'axe 22 dudit train d'atterrissage avant 10, ainsi que l'axe longitudinal 21 de l'aéronef A, qui permettent de mettre en évidence :
- un angle α1 qui illustre ladite consigne kβAVc ; et
- un angle α2 qui illustre ladite consigne βRA.

Ce dernier mode de réalisation consiste à engendrer en boucle ouverte, une consigne kβAVc d'orientation des roues du train avant 10 de l'aéronef A, qui est additionnée à une consigne βRA d'orientation issue de l'asservissement en lacet. Ces deux consignes d'orientation des roues du train d'atterrissage avant 10 sont telles que, lorsque la rotation de l'aéronef A se stabilise autour de la consigne de rotation demandée par le pilote (via les pédales du palonnier 8 et/ou le volant 9), le résultat de cette sommation est équivalent à la consigne d'orientation des roues définie dans le mode de réalisation précédent : la consigne en boucle ouverte correspond alors théoriquement à l'angle d'orientation α1 du vecteur vitesse VO du train avant 10 de l'aéronef A et la consigne d'orientation des roues issue de l'asservissement de la vitesse de lacet correspond théoriquement à l'opposé de l'angle de dérapage α2 formé entre le vecteur vitesse VO et l'axe 22 des roues du train avant 10. Un tel mode de réalisation permet, pour des vitesses nulles ou très basses, de s'affranchir de la transition vers une loi directe présentée précédemment (à ces vitesses, la sortie βRA de l'asservissement en lacet s'annule et il ne reste donc plus que la consigne kβAVc d'orientation des roues du train avant 10 de l'aéronef A, calculée en boucle ouverte).

## Revendications

1. Procédé de pilotage d'un aéronef (A) roulant au sol,
**caractérisé en ce que**, de façon automatique :
a) on détermine une consigne de rotation de l'aéronef (A);
b) on détermine un moment global devant être appliqué à l'aéronef (A) selon l'axe de lacet pour que ledit aéronef (A) réalise ladite consigne de rotation ;
c) on répartit ledit moment global en une somme de moments élémentaires, dont chacun correspond à l'effet engendré sur l'aéronef (A) respectivement par l'une d'une pluralité de gouvernes (3A, 3B, 3C, 3D), chacune desdites gouvernes représentant un moyen particulier qui est susceptible d'agir sur le mouvement de lacet de l'aéronef et qui est commandé par au moins un actionneur (4A, 4B, 4C, 4D) ; et
d) pour chacune desdites gouvernes (3A, 3B, 3C, 3D), on calcule une consigne à appliquer à l'actionneur (4A, 4B, 4C, 4D) de la gouverne correspondante de sorte que cette dernière engendre le moment élémentaire associé.

2. Procédé selon la revendication 1,
**caractérisé en ce que**, lorsque l'aéronef (A) est en pilotage manuel, on détermine à l'étape a) ladite consigne de rotation, à partir des ordres engendrés par au moins un organe de commande (8, 9) de l'aéronef (A), qui est susceptible d'être actionné par un pilote dudit aéronef (A).

3. Procédé selon la revendication 1,
**caractérisé en ce que**, lorsque l'aéronef (A) est en pilotage automatique, on détermine à l'étape a) ladite consigne de rotation, à partir de l'écart éventuel entre la position de l'aéronef (A) sur une piste au sol et l'axe de cette piste.

4. Procédé selon l'une quelconque des revendications précédentes,
**caractérisé en ce qu'**à l'étape a), ladite consigne de rotation est une consigne de vitesse de lacet de l'aéronef (A).

5. Procédé selon la revendication 2,
**caractérisé en ce que** l'aéronef (A) comporte, comme organes de commande, au moins un palonnier (8) et un volant (9) de commande d'orientation du train d'atterrissage avant (10) dudit aéronef (A), et **en ce qu'**à l'étape a):
- on traduit l'ordre engendré par le palonnier (8) directement en une première consigne de vitesse de lacet ;
- on traduit l'ordre engendré par le volant (9) en une consigne intermédiaire d'angle d'orientation du vecteur vitesse du train d'atterrissage avant (10), qui est convertie en une seconde consigne de vitesse de lacet ; et
- on fait la somme desdites première et seconde consignes de vitesse de lacet de manière à obtenir une vitesse globale de lacet qui représente ladite consigne de rotation de l'aéronef (A).

6. Procédé selon la revendication 5,
**caractérisé en ce que** l'on multiplie ladite consigne intermédiaire d'angle d'orientation du vecteur vitesse, par un coefficient de limitation qui dépend de la vitesse longitudinale de l'aéronef (A), le résultat obtenu étant converti dans ladite seconde consigne de vitesse de lacet.

7. Procédé selon l'une quelconque des revendications précédentes,
**caractérisé en ce que** l'on utilise, comme gouverne, au moins la gouverne de direction de la dérive de l'aéronef (A), dont on commande l'orientation, et le train d'atterrissage avant (10), dont on commande également l'orientation.

8. Procédé selon l'une quelconque des revendications précédentes,
**caractérisé en ce que** l'on utilise, comme gouvernes, au moins deux trains d'atterrissage différents (19A, 19B) de l'aéronef (A), dont on commande le freinage de façon dissymétrique.

9. Procédé selon l'une quelconque des revendications précédentes,
**caractérisé en ce que** l'on utilise, comme gouvernes, au moins deux moteurs (20A, 20B, 20C, 20D) de l'aéronef (A), agencés de part et d'autre de l'axe longitudinal (21) dudit aéronef (A), dont on commande la poussée de façon dissymétrique.

10. Procédé selon l'une quelconque des revendications précédentes,
**caractérisé en ce qu'**à l'étape c), pour répartir ledit moment global en une somme de moments élémentaires associés respectivement à différentes gouvernes (3A, 3B, 3C, 3D), on tient compte d'au moins l'un des critères suivants, relatifs auxdites gouvernes :
- la hiérarchie des gouvernes ;
- la disponibilité des gouvernes ;
- l'efficacité des gouvernes ; et
- le niveau d'autorité des gouvernes.

11. Procédé selon l'une quelconque des revendications précédentes,
**caractérisé en ce que** l'on utilise, comme gouverne, au moins le train d'atterrissage avant (10) de l'aéronef (A), dont on commande l'orientation, et **en ce qu'**à l'étape c), on répartit le moment global en fonction au moins de la vitesse longitudinale (V) de l'aéronef (A).

12. Procédé selon la revendication 11,
**caractérisé en ce que** :
- lorsque ladite vitesse longitudinale (V) de l'aéronef (A) est inférieure à une première vitesse prédéterminée (V1A), la répartition est maximale sur ledit train d'atterrissage avant (10) ;
- lorsque ladite vitesse longitudinale (V) de l'aéronef (A) est supérieure à une seconde vitesse prédéterminée (V2A) qui est supérieure à ladite première vitesse prédéterminée (V1A), la répartition est minimale sur ledit train d'atterrissage avant (10) ; et
- ladite répartition est décroissante vis-à-vis dudit train d'atterrissage avant (10) entre lesdites première et seconde vitesses prédéterminées (V1A, V2A).

13. Procédé selon la revendication 11,
**caractérisé en ce que** :
- lorsque ladite vitesse longitudinale (V) de l'aéronef (A) est inférieure à une première vitesse prédéterminée (V1 B), on désactive le mode de commande par répartition (MCR) et on réalise une commande directe (CD) du train d'atterrissage avant (10) ;
- lorsque ladite vitesse longitudinale (V) de l'aéronef (4) est supérieure à une seconde vitesse prédéterminée (V2B), qui est supérieure à ladite première vitesse prédéterminée (V1B), on désactive la commande directe (CD) et on réalise uniquement un mode de commande par répartition (MCR); et
- entre lesdites première et seconde vitesses prédéterminées (V1 B, V2B), on passe progressivement de la commande directe (CD) au mode de commande par répartition (MCR).

14. Procédé selon l'une quelconque des revendications précédentes,
**caractérisé en ce que** l'on utilise, comme gouverne, le train d'atterrissage avant (10) de l'aéronef (A), dont on commande l'orientation, et **en ce que** la consigne à appliquer à l'actionneur correspondant est la somme d'une première consigne d'orientation du train d'atterrissage avant (10) déterminée à l'étape d), et d'une seconde consigne d'orientation du train d'atterrissage avant (10), engendrée par une boucle ouverte spécifique.

15. Dispositif de pilotage d'un aéronef roulant au sol, ledit dispositif (1) comportant :
- des moyens (2A, 2B) pour engendrer des ordres de commande ;
- des gouvernes (3A, 3B, 3C, 3D) représentant chacune un moyen particulier qui est susceptible d'agir sur le mouvement de lacet de l'aéronef (A) et qui est commandé par au moins un actionneur (4A, 4B, 4C, 4D) ; et
- une unité centrale (UC) qui détermine, à partir desdits ordres de commande, des consignes à appliquer aux actionneurs (4A, 4B, 4C, 4D) desdites gouvernes (3A, 3B, 3C, 3D),
**caractérisé en ce que** ladite unité centrale (UC) comporte :
- des moyens (5A, 5B) pour déterminer une consigne de rotation de l'aéronef (A), à partir desdits ordres de commande ;
- des moyens (6) pour déterminer un moment global devant être appliqué à l'aéronef (A) selon l'axe de lacet pour que ledit aéronef (A) réalise ladite consigne de rotation ;
- des moyens (7) pour répartir ledit moment global en une somme de moments élémentaires, dont chacun correspond à l'effet engendré sur l'aéronef (A) respectivement par lesdites gouvernes (3A, 3B, 3C, 3D) ; et
- des moyens (7) pour calculer, pour chacune desdites gouvernes (3A, 3B, 3C, 3D), la consigne à appliquer à l'actionneur (4A, 4B, 4C, 4D) de la gouverne correspondante de sorte que cette dernière engendre le moment élémentaire associé.

## Claims

1. A method of piloting an aircraft (A) traveling on the ground, **characterized in that** automatically:
a) an instruction to rotate the aircraft (A) is determined;
b) a global moment is determined having to be applied to the aircraft (A) about the yaw axis so that said aircraft (A) performs said rotation instruction;
c) said global moment is divided into a sum of elementary moments, each of which corresponds to the effect generated on the aircraft (A) respectively by one of a plurality of control surfaces (3A, 3B, 3C, 3D), each of said control surfaces representing a particular means that is capable of acting on the yaw movement of the aircraft and which is controlled by at least one actuator (4A, 4B, 4C, 4D); and
d) for each of said control surfaces (3A, 3B, 3C, 3D), an instruction is computed to be applied to the actuator (4A, 4B, 4C, 4D) of the corresponding control surface such that the latter generates the associated elementary moment.

2. The method as claimed in claim 1,
**characterized in that**, when the aircraft (A) is on manual pilot, said rotation instruction is determined in step a), based on the orders generated by at least one control member (8, 9) of the aircraft (A) which is capable of being actuated by a pilot of said aircraft (A).

3. The method as claimed in claim 1,
**characterized in that**, when the aircraft -(A) is on automatic pilot, said rotation instruction is determined in step a), based on the possible difference between the position of the aircraft (A) on a runway on the ground and the center line of that runway.

4. The method as claimed in any one of the preceding claims,
**characterized in that**, in step a), said rotation instruction is a yaw speed instruction for the aircraft (A).

5. The method as claimed in claim 2,
**characterized in that** the aircraft (A) comprises, as control members, at least one control column (8) and one steering wheel (9) to steer the front landing gear (10) of said aircraft (A) and **in that**, in step a) :
- the order generated by the control column (8) is converted directly into a first yaw speed instruction;
- the order generated by the steering wheel (9) is converted into an intermediate instruction of angle of orientation of the speed vector of the front landing gear (10), which is converted into a second yaw speed instruction; and
- said first and second yaw speed instructions are added together to obtain a global yaw speed which represents said instruction to rotate the aircraft (A).

6. The method as claimed in claim 5,
**characterized in that** said intermediate instruction of angle of- orientation of the -speed vector is multiplied by a limitation coefficient which depends on the longitudinal speed of the aircraft (A), the result obtained being converted into said second yaw speed instruction.

7. The method as claimed in any one of the preceding claims,
**characterized in that** use is made, as a control surface, of at least the tail fin rudder control surface of the aircraft (A), which is steered, and the front landing gear (10), which is also steered.

8. The method as claimed in any one of the preceding claims,
**characterized in that** use is made, as control surfaces, of at least two different landing gears (19A, 19B) of the aircraft (A), the braking of which is controlled in dissymmetrical manner.

9. The method as claimed in any one of the preceding claims,
**characterized in that** use is made, as control surfaces, of at least two engines (20A, 20B, 20C, 20D) of the aircraft (A), disposed either side of the longitudinal axis (21) of said aircraft (A), the thrust of which is controlled in dissymmetrical manner.

10. The method as claimed in any one of the preceding claims,
**characterized in that**, in step c), to divide said global moment into a sum of elementary moments associated respectively with different control surfaces (3A, 3B, 3C, 3D), account is taken of at least one- of the following criteria, relating to said control surfaces:
- the hierarchy of the control surfaces;
- the availability of the control surfaces;
- the effectiveness of the control surfaces; and
- the level of authority of the control surfaces.

11. The method as claimed in any one of the preceding claims,
**characterized in that** use is made, as a control surface, of at least the front landing gear (10) of the aircraft (A), which is steered, and wherein, in step c), the global moment is divided as a function at least of the longitudinal speed (V) of the aircraft (A).

12. The method as claimed in claim 11,
**characterized in that**:
- when said longitudinal speed (V) of the aircraft (A) is lower than a first predetermined speed (V1A), the division is maximal on said front landing gear (10);
- when said longitudinal speed (V) of the aircraft (A) is higher than a second predetermined speed (V2A) which is higher than said first predetermined speed (V1A), the division is minimal on said front landing gear (10); and
- said division is decreasing with respect to said front landing gear (10) between said first and second predetermined speeds (V1A, V2A).

13. The method as claimed in claim 11,
**characterized in that**:
- when said longitudinal speed (V) of the aircraft (A) is lower than a first predetermined speed (V1B), the control by division mode (MCR) is deactivated and a direct control (CD) of the front landing gear (10) is applied;
- when said longitudinal speed (V) of the aircraft (A) is higher than a second predetermined speed (V2B), which is higher than said first predetermined speed (V1B), the direct control (CD) is deactivated and only a control by division mode (MCR) is applied; and
- between said first and second predetermined speeds (V1B, V2B), control moves progressively from direct control (CD) to the control by division mode (MCR).

14. The method as claimed in any one of the preceding claims,
**characterized in that** use is made, as a control surface, of the- front landing gear (10) of the aircraft (A), which is steered, and wherein the instruction to be applied to the corresponding actuator is the sum of a first front landing gear (10) steering instruction determined in step d) and a second front landing gear (10) steering instruction, generated by a specific open loop.

15. A device for piloting an aircraft traveling on the ground, said device (1) comprising:
- means (2A, 2B) for generating control orders;
- control surfaces (3A, 3B, 3C, 3D) each representing a particular means which is capable of acting on the yaw movement of the aircraft (A) and which is controlled- by at least one actuator (4A, 4B, 4C, 4D); and
- a central unit (UC) which, based on said control orders, determines instructions to be applied to the actuators (4A, 4B, 4C, 4D) of said control surfaces (3A, 3B, 3C, 3D),
**characterized in that** said central unit (UC) comprises:
- means (5A, 5B) for determining an instruction to rotate the aircraft (A), based on said control orders;
- means (6) for determining a global moment having to be applied to the aircraft (A) about the yaw axis so that said aircraft (A) performs said rotation instruction;
- means (7)- for dividing said global moment into a sum of elementary moments, each of which corresponds to the effect generated on -the aircraft (A) respectively by said control surfaces (3A, 3B, 3C, 3D); and
- means (7) for computing, for each of said control surfaces (3A, 3B, 3C, 3D), the instruction to be applied to the actuator (4A, 4B, 4C, 4D) of the corresponding control surface such that the latter generates the associated elementary moment.

## Patentansprüche

1. Verfahren zur Steuerung eines am Boden rollenden Flugzeugs (A),
**dadurch gekennzeichnet, dass** automatisch:
a) ein Einstellwert für die Drehung des Flugzeugs (A) bestimmt wird;
b) ein Gesamtmoment bestimmt wird, bevor es am Flugzeug (A) entlang der Gierachse angewendet wird, damit das Flugzeug (A) den Einstellwert für die Drehung ausführt;
c) das Gesamtmoment auf eine Summe von Elementarmomenten aufgeteilt wird, von denen jedes einem Effekt entspricht, der am Flugzeug (A) jeweils durch eine einer Mehrzahl von Leitwerken (3A, 3B, 3C, 3D) erzeugt wird, wobei jedes der Leitwerke eines spezielles Mittel darstellt, das dazu geeignet ist, auf die Gierbewegung des Flugzeugs einzuwirken und das durch wenigstens ein Stellglied (4A, 4B, 4C, 4D) gesteuert wird; und
d) für jedes der Leitwerke (3A, 3B, 3C, 3D) ein Einstellwert berechnet wird, der auf das Stellglied (4A, 4B, 4C, 4D) der entsprechenden Leitwerke angewendet wird, derart, dass dieser das zugehörige Elementarmoment erzeugt.

2. Verfahren nach Anspruch1,
**dadurch gekennzeichnet, dass**, wenn das Flugzeug (A) manuell gesteuert wird, bestimmt wird am Schritt a) der Drehwert aus Befehlen, die durch wenigstens ein Steuerorgan (8, 9) des Flugzeugs (A), welches von einem Piloten des Flugzeugs (A) bestätigt werden kann, erzeugt wird.

3. Verfahren nach Anspruch 1,
**dadurch gekennzeichnet, dass**, wenn das Flugzeug (A) automatisch gesteuert wird, bestimmt wird am Schritt a) der Drehwert aus der möglichen Abweichung zwischen der Position des Flugzeugs (A) auf einer Piste am Boden und der Mittellinie dieser Piste.

4. Verfahren nach einem der vorstehenden Ansprüche,
**dadurch gekennzeichnet, dass** am Schritt a) der Drehwert ein Einstellwert für die Giergeschwindigkeit des Flugzeugs (A) ist.

5. Verfahren nach Anspruch 2,
**dadurch gekennzeichnet, dass** das Flugzeug (A) als Steuerorgane wenigstens einen Steuerknüppel (8) und ein Handrad (9) zur Steuerung der Ausrichtung des vorderen Landefahrwerks (10) des Flugzeugs (A) umfasst und dass am Schritt a):
- der durch den Steuerknüppel (8) erzeugte Befehl direkt in einen ersten Einstellwert für die Giergeschwindigkeit übertragen wird;
- der durch das Handrad (9) erzeugte Befehl in einen Zwischenwert des Richtungswinkels des Geschwindigkeitsvektors des vorderen Landefahrwerks (10) übertragen wird, der in einen zweiten Einstellwert für die Giergeschwindigkeit umgewandelt wird; und
- die Summe aus dem ersten und dem zweiten Einstellwert für die Giergeschwindigkeit gebildet wird, um eine gesamte Giergeschwindigkeit zu erhalten, welche den Einstellwert für die Drehung des Flugzeugs (A) darstellt.

6. Verfahren nach Anspruch 5,
**dadurch gekennzeichnet, dass** der Zwischenwert des Richtungswinkels des Geschwindigkeitsvektors mit einem Grenzkoeffizienten multipliziert wird, der von der Längsgeschwindigkeit des Flugzeugs (A) abhängt, wobei das erhaltene Resultat in den zweiten Einstellwert für die Giergeschwindigkeit umgewandelt wird.

7. Verfahren nach einem der vorstehenden Ansprüche,
**dadurch gekennzeichnet, dass** als Leitwerk wenigstens das Seitenruder des Seitenleitwerks des Flugzeugs (A), mit dem die Ausrichtung gesteuert wird, und das vordere Landefahrwerk (10), mit dem auch die Ausrichtung gesteuert wird, verwendet wird.

8. Verfahren nach einem der vorstehenden Ansprüche,
**dadurch gekennzeichnet, dass** als Leitwerke wenigstens zwei verschiedene Landefahrwerke (19A, 19B) des Flugzeugs (A) verwendet werden, mit denen die Bremsung asymmetrisch gesteuert wird.

9. Verfahren nach einem der vorstehenden Ansprüche,
**dadurch gekennzeichnet, dass** als Leitwerke wenigstens zwei Motoren (20A, 20B, 20C, 20D) des Flugzeugs (A) verwendet werden, die beiderseits der Längsachse (21) des Flugzeugs (A) angeordnet sind, mit denen der Schub asymmetrisch gesteuert wird.

10. Verfahren nach einem der vorstehenden Ansprüche,
**dadurch gekennzeichnet, dass** am Schritt c), um das Gesamtmoment in eine Summe von Elementarmomente aufzuteilen, die jeweils verschiedenen Leitwerke (3A, 3B, 3C, 3D) zugeordnet sind, wenigstens eines der folgenden Kriterien berücksichtigt wird, das in Bezug zu den Leitwerken steht:
- die Hierarchie der Leitwerke;
- die Verfügbarkeit der Leitwerke;
- die Wirksamkeit der Leitwerke; und
- die Autoritätsstufe der Leitwerke.

11. Verfahren nach einem der vorstehenden Ansprüche,
**dadurch gekennzeichnet, dass** als Leitwerk wenigstens das vordere Landefahrwerk (10) des Flugzeugs (A) verwendet wird, mit dem die Ausrichtung gesteuert wird, und dass am Schritt c) das Gesamtmoment als Funktion wenigstens der Längsgeschwindigkeit (V) des Flugzeugs (A) verteilt wird.

12. Verfahren nach Anspruch 11,
**dadurch gekennzeichnet, dass**:
- wenn die Längsgeschwindigkeit (V) des Flugzeugs (A) kleiner als eine erste vorbestimmte Geschwindigkeit (V1A) ist, die Verteilung maximal auf das vordere Landefahrwerk (10) erfolgt;
- wenn die Längsgeschwindigkeit (V) des Flugzeugs (A) größer als eine zweite vorbestimmte Geschwindigkeit (V2A) ist, die größer als die erste vorbestimmte Geschwindigkeit (V1A) ist, die Verteilung minimal auf das vordere Landefahrwerk (10) erfolgt; und
- die Verteilung gegenüber dem vorderen Landefahrwerk (10) zwischen der ersten und der zweiten vorbestimmten Geschwindigkeit (V1A, V2A) abnimmt.

13. Verfahren nach Anspruch 11,
**dadurch gekennzeichnet, dass**:
- wenn die Längsgeschwindigkeit (V) des Flugzeugs (A) kleiner als eine erste vorbestimmte Geschwindigkeit (V1B) ist, der Steuermodus mit Verteilung (MCR) deaktiviert wird und eine direkte Steuerung (CD) des vorderen Landefahrwerks (10) ausgeführt wird;
- wenn die Längsgeschwindigkeit (V) des Flugzeugs (4) größer als eine zweite vorbestimmte Geschwindigkeit (V2B) ist, die größer als die erste vorbestimmte Geschwindigkeit (V1B) ist, die direkte Steuerung (CD) deaktiviert wird und nur ein Steuermodus mit Verteilung (MCR) durchgeführt wird; und
- zwischen der ersten und der zweiten vorbestimmten Geschwindigkeit (V1B, V2B) progressiv von der direkten Steuerung (CD) zum Steuermodus mit Verteilung (MCR) übergegangen wird.

14. Verfahren nach einem der vorstehenden Ansprüche,
**dadurch gekennzeichnet, dass** als Leitwerk das vordere Landefahrwerk (10) des Flugzeugs (A) verwendet wird, mit dem die Richtung gesteuert wird, und dass der Einstellwert, der an ein entsprechendes Stellglied angewendet werden soll, die Summe eines ersten Richtungswertes des vorderen Landefahrwerks (10) ist, der am Schritt d) bestimmt wird, und eines zweiten Richtungswertes des vorderen Landefahrwerks (10) ist, der durch eine spezifische offene Schleife erzeugt wird.

15. Vorrichtung zur Steuerung eines am Boden rollenden Flugzeugs, wobei die Vorrichtung (1) umfasst:
- Mittel (2A, 2B), um Steuerbefehle zu erzeugen;
- Leitwerke (3A, 3B, 3C, 3D), welche jeweils ein spezielles Mittel darstellen, das dazu geeignet ist, auf die Gierbewegung des Flugzeugs (A) einzuwirken und das durch wenigstens ein Stellglied (4A, 4B, 4C, 4D) gesteuert wird; und
- eine Zentraleinheit (UC), die aus den Steuerbefehlen die Einstellwerte bestimmt, die an die Stellglieder (4A, 4B, 4C, 4D) der Leitwerke (3A, 3B, 3C, 3D) angewendet werden,
**dadurch gekennzeichnet, dass** die Zentraleinheit (UC) umfasst:
- Mittel (5A, 5B), um einen Drehwert des Flugzeugs (A) aus den Steuerfehlen zu bestimmen;
- Mittel (6), um ein Gesamtmoment zu bestimmen, bevor dieses an einem Flugzeug (A) entlang der Gierachse angewendet wird, damit das Flugzeug (A) den Drehwert ausführen kann;
- Mittel (7), um das Gesamtmoment in eine Summe von Elementarmomente aufzuteilen, von denen jedes einem Effekt entspricht, der an dem Flugzeug (A) jeweils durch die Leitwerke (3A, 3B, 3C, 3D) ausgeübt wird; und
- Mittel (7), um für jede der Leitwerke (3A, 3B, 3C, 3D) den Einstellwert zu berechnen, der auf das Stellglied (4A, 4B, 4C, 4D) der entsprechenden Leitwerke angewendet werden soll, derart, dass diese das zugehörige Elementarmoment erzeugt.
